Europäisches Patentamt

(19) European Patent Office

Office européen des brevets

(11) Publication number: **0 023 194**

**A1**

(12) # EUROPEAN PATENT APPLICATION

(21) Application number: **80830045.3**

(22) Date of filing: **04.07.80**

(51) Int. Cl.³: **B 29 D 27/04**

(30) Priority: **11.07.79 IT 344879**

(43) Date of publication of application:
**28.01.81 Bulletin 81/4**

(84) Designated Contracting States:
**AT BE CH DE FR GB LI LU NL SE**

(71) Applicant: Morello, Sergio
Via Passione, 9
Milano(IT)

(72) Inventor: Morello, Sergio
Via Passione, 9
Milano(IT)

(74) Representative: Zorzoli, Franco
c/o BUGNION S.p.A. Via Vincenzo Monti 55
I-20123 Milan(IT)

(54) A process for manufacturing coating panels, and panels obtained with such process.

(57) A process for manufacturing coating panels in different shades and with different degrees of surface finish.

Such process makes it possible to produce panels the surface of which, bound to face outwardly, presents two separate areas, one of which is recessed as compared to the other.

Said process requires the employment of a die-counterdie (11,12) unit for the moulding of the abovementioned panel, in which the surface (21) of the die (11) defines that part of the panel which is bound to be external.

FIG. 1

EP 0 023 194 A1

Croydon Printing Company Ltd.

- 1 -

A process for manufacturing coating panels, and panels obtained with such process

This invention relates to a process for manufacturing coating panels in which the surface designed to face outwardly presents at least one (generally recessed) area which - for aesthetic reasons - is characterized by a different shade and degree of surface finish with respect to the shade and surface finish of the remaining area of the aforemen tioned external surface; said invention is also concerned with the panels obtained employing said process. Recent market research has shown that the clientele doesn't appreciate in any special way the aesthetic look of panels presenting the same shade on the entire surface designed to face outwardly.

In order to overcome such drawback, the manufacturers have produced panels characterized as follows: the surface designed to face outwardly is composed of an outside area (comprising the arm rest and the handle) coated with a waterproof synthetic resin sheet (e.g. : leatherette) of an established colour, while the remaining portion of same is coated with a thin sheet of material (e.g.: velvet).

Hence the problem arises of having to attach the sheet of material to the underlying synthetic resin sheet through bonding agents or seams, but both solutions present a number of drawbacks both from the aesthetic and the functional points of view.

The former solution, in fact, doesn't provide for a gap between the sheet of material and the underlying leatherette surface onto which the sheet of material is glued; furthermore, the sheet of material tends to come off as it wears.

The latter solution entails the employment of considerable labour and power-consuming machines for the execution of the seams: while this has a negative effect on the cost of the panel, it doesn't even guarantee the achievement of the desired geometry in regard to the separation line between the resin sheet and the material, also because the areas in which the seams are to be executed are generally concave.

In order to overcome the above problems, the Applicant has devised a manufacturing process by which it is possible to obtain coating panels in which the surface designed to face outwardly presents at least two separate areas, a first area of which - generally recessed with respect to the other - is entirely contained in and circumscribed by the second area, said areas being produced in pre-established shades and degrees of surface finish, being separated by a continuous line developing according to a predetermined geometry, and being defined by two sheets of any material whatsoever, or by a sheet and a rigid lamina, both made of any material whatever.

The above is attained through this invention which relates to a process for manufacturing coating panels of the type presenting, on the surface designed to face outwardly, at least two distinct areas, a first area of which is entirely contained in and circumscribed by the second area, said process entailing the employment of a die-counterdie unit for the moulding of a corresponding panel, in which the surface of the die defines the surface of the panel which is designed to face outwardly and is provided with a relief the perimetral top edge of which develops perfectly in accordance with the corresponding closed line delimiting the aforementioned first area, and entailing, furthermore, the preliminary execution of a practically flat component, the perimetral development of which contains the perimetral development of the edge of the head of said relief, and the external

front surface of which is designed to identify with the surface of said first area; said process being characterized by the fact that it entails the following stages:

a) laying of said component into a complementary seat produced in the head of said relief so as to match its external front surface with the surface of said seat and, furthermore, so as to allow the edge of said component to protrude with respect to the perimetral edge of the abovementioned head;

b) laying of a sheet onto the internal front surface of said component, onto the edge of the component itself and onto that portion of the surface of the die which defines the second area of the panel surface designed to face outwardly;

c) closing of the die-counterdie unit with the subsequent pressure-injection of synthetic resin into the hollow space defined by said sheet and by the surface of the counterdie, and subsequent opening of said unit after a definite time, drawing the moulded panel from same.

In a second embodiment, the aforementioned process - which entails the employment of a die whose surface defines the surface of the panel which is designed to face outwardly, is endowed with said relief fulfilling the abovementioned conditions and is, furthermore, endowed with suction units - is characterized by the fact that it comprises:

a) laying of said component into a complementary seat produced in the head of said relief so as to match its external front surface with the surface of said seat and, furthermore, so as to allow the edge of said component to protrude with respect to the perimetral edge of the abovementioned head;

b) laying of a thermoformable material slab, which is made to rest on the die and on the internal front surface of said component;

c) heating of said thermoformable slab at a definite temperature;

d) actuation of the aforementioned suction units in order to achieve the permanent set of the above slab, by using said units to keep

- 4 -

it adherent to the internal front surface of said component, to the edge of same and to the remaining surface of the die for such amount of time as is required by the slab to reach permanent hardening.

In order to point out some further characteristics and advantages of this invention, some illustration is supplied hereunder regarding five preferred embodiments of the coating panels obtained through the first embodiment of the process under discussion, and one further panel obtained through the second embodiment of said process, said panels being illustrated by way of example, not as a restriction, in the enclosed drawings where:

- figure 1 gives a cross-sectional view of a portion of the die-counterdie unit with the interposed panel, executed according to the first embodiment of the process under discussion, at the level of the separation line between the two areas of the panel having different shades and different degrees of surface finish;

- figure 2 supplies the same view of the portion of panel shown in figure 1, the panel having been drawn from the die-counterdie unit;

- figures 3, 4, 5, 6 illustrate just as many variations of the panel shown in figure 2, all of which can be obtained with the first embodiment of the process under discussion;

- figure 7 is a perspective view of a coating panel obtained with the first embodiment of the process under discussion;

- figures 8a, 8b, 8c, illustrate schematically the stages which are to be followed when manufacturing a panel (a portion of which can be seen in figure 8b) by means of the second embodiment of the process under discussion.

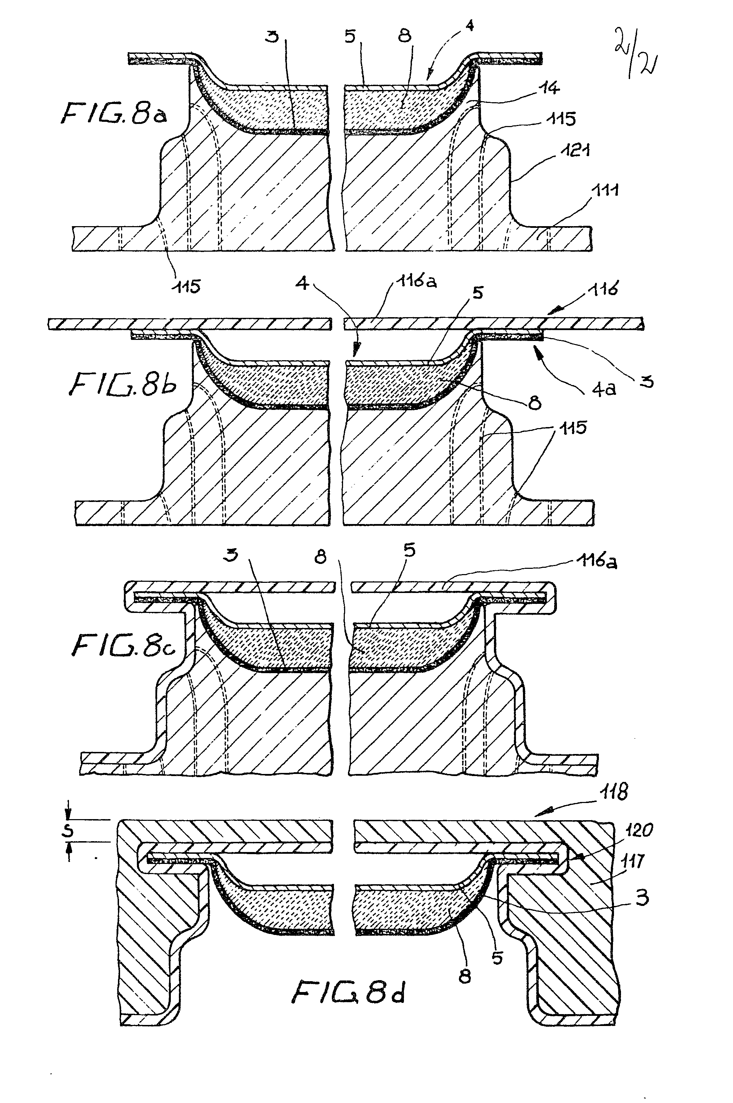

With reference to figure 7, "1" has been adopted to mark a panel obtained through the first embodiment of the process under discussion, designed to line a corresponding door (in particular, the rear door of a motor vehicle).

The coating of the surface of said panel designed to face outwardly is executed by means of a synthetic resin sheet 2 (e.g.: leatherette) and a sheet of material 3 (e.g. : velvet), the latter covering - for obvious aesthetic reasons - the bottom of a recessed area 6 produced in said surface; sheets 2 and 3 are separated by a line 7 which develops according to a predetermined line (in this particular case coinciding with the internal bottom edge of recessed area 6).

The amanufacture of panel 1 according to the first embodiment of the process under discussion, entails the employment of a unit 10 made up of a die 11 and its relative counterdie 12.

Surface 21 of die 11 defines surface 1a of the panel, which is designed to face outwardly; in view of the above, said surface 21 presents a relief 14 defining the aforementioned recessed area 6, i.e. the first area of the panel; surface 22 of counterdie 12 defines surface 1b of the panel, which is designed to face inwardly.

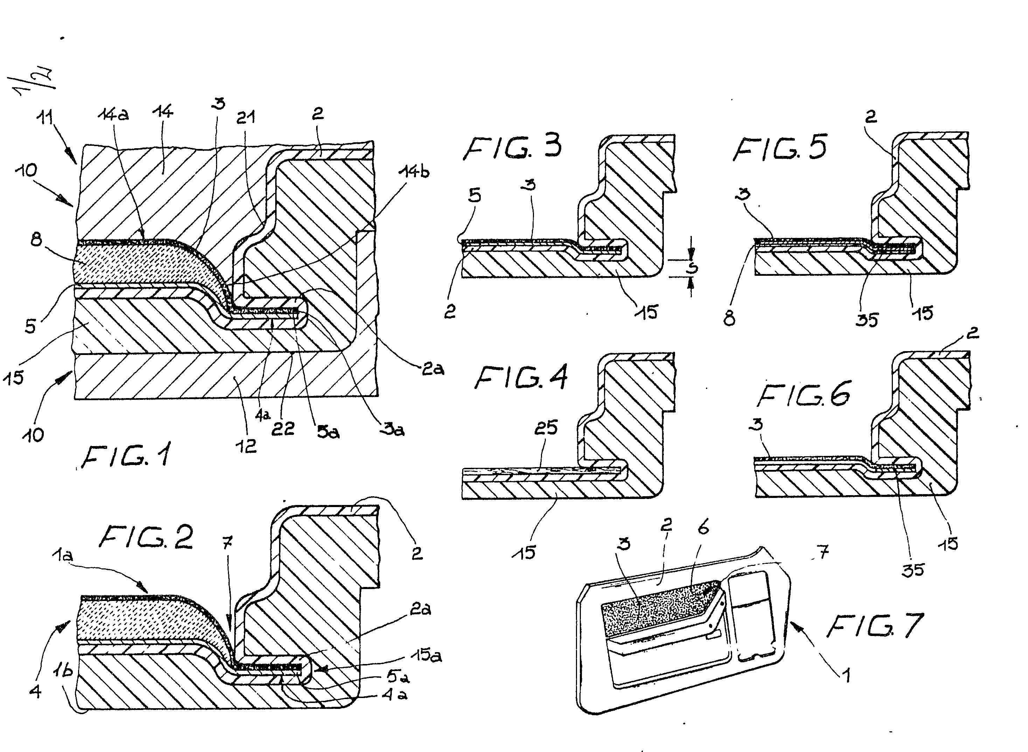

The process under discussion entails the preliminary manufacture of a component 4 which, in the first embodiment (figs. 1, 2) is made up of a metal lamina 5 (which constitutes the carrying framework of the component), a layer 8 made of elastic material yielding to the touch (e. g.: soft polyurethane) and coating sheet 3 (e.g.: velvet).

The abovementioned component is manufactured according to known techniques, while edges 3a, 5a of sheet 3 and lamina 5 respectively are compressed strongly and simultaneously bent (e.g.: through a drawing process) as is kshown in figures 1 and 2, so as to achieve the interlocking of said edges.

The perimetral development of component 4 is practically similar to the perimetral development of the head of relief 14 of die 11, but its area exceeds that of the above head; the reason for this will be made clear later on; moreover, the external surface of sheet 3 (excluding edge 3a) defines the outline of the bottom of the aforementioned recessed area 6.

The process under discussion entails the following stages in order to manufacture panel 1:

a) Laying of component 4 into a complementary seat 14a produced in the head of relief 14 so as to match the external surface of sheet 3 (or the external front part of component 1) with the surface of seat 14a, and furthermore, so as to allow the edge 4a of said component to protrude with respect to the perimetral edge 14b of said head .

b) Laying of sheet 2 so as to make it adhere to the internal front part of component 4 (i.e., touching metal lamina 5), to the strip of said component circumscribing the abovementioned seat 14a, to the side surface of said relief and to the portion of surface 21 of die 11 defining the second area of surface 1a of the panel, which is designed to face outwardly.

c) Closing of the die-counterdie unit and subsequent pressure injection of synthetic resin (e.g.: polyurethane foam) into hollow space 15 defined by sheet 2 and surface 22 of counterdie 12. The expansion reaction of the polyurethane foam brings about an approximately even pressure all around sheet 2; this leads said sheet to adhere perfectly to the internal front part of component 4 (i.e. lamina 5), to edge 4a of said component 4 (in portion 2a) and to surface 21 of die 11 defining the aforementioned second area of the panel. The hardening of the foam, which follows its expansion phase, stabilizes the abovementioned situation and leads, furthermore, to the formation of the carrying framework of the panel coinciding with said hollow space 15. After a certain time (which is necessary in order to accomplish the abovementioned reactions) said unit is opened, and panel 1 obtained through the above stages is drawn from the unit itself. The carrying framework of the panel thus obtained consists of the rigid polyurethane, the volume of which coincides with the volume of said hollow space 15; the moulding operation produced an undercut seat or groove, 15a, in the above framework, in which edge 4a of component 4 is stably embedded with portion 2a of sheet 2 (in other words, the abovementioned edges 5a, 3a are tightly embedded in said groove): this prevents sheet 3 from sliding with regard to sheet 2, the latter being integral with the corresponding portion of the carrying framework of the panel.

The second embodiment of the process under discussion requires the employment of a die 111 the surface of which (121) defines the two abovementioned areas of the panel composing the surface of the panel which is designed to face outwardly; hence die 111 is endowed with relief 14 fulfilling the conditions specified under the first embodiment of the process; moreover, the portion of the die defining said second area presents holes 115, which are connected to currently known types of suction units, not shown in the figures.

The second embodiment of said process entails stages a), b), c), d) listed hereunder, stage a) of which is equal to the corresponding stage in the first embodiment.

Stage b) entails the laying of a slab 116, made of thermoformable material, onto the die and onto the internal front surface of said component 4. Stage c) entails the heating of said slab 116 by means of a known type of heat source (not illustrated), reaching a temperature capable of softening the slab itself.

Stage d) entails the operation of the abovementioned suction units; this leads to the permanent set of slab 116 which is sucked (fig. 8c) so as to adhere to the internal front surface of component 4, to edge 4a of this same component and to the remaining surface of die 111; said suction units keep on operating for such an amount of time as is necessary for the slab to harden.

The internal surface 116a of slab 116 may be coupled - in accordance with known technology - with a soft polyurethane layer 117, both components making up a panel 118 a portion of which can be seen in figure 8d. Slab 116 constitutes the carrying framework of panel 118, defines the external surface of the panel which is not connected to component 4 (or second area), and furthermore forms an undercut groove 120 in which edge 4a of component 4 is stably embedded.

A considerable advantage of panels 1, 118 obtained through the two embodiments of the process under discussion respectively, is supplied by the fact that edge 4a of component 4 is embedded in a groove (15a, 120 respectively) which extends along a plane which is parallel to the surface of greatest development of said component; in other words, the anchorage of edge 4a to the carrying framework 15 of panel 1 or to slab 116 of panel 118 respectively, is executed in a lateral direction with regard to component 4.

The above makes it possible to reduce (first embodiment) the thickness "S" of the carrying framework touching metal lamina 5 (this does not affect the mechanical resistance of panel 1 in such area since component 4 is strengthened by lamina 5); such feature is of material importance in view of a reduction in depth of the panel, the bottom boundary of which — in the portion enclosing recessed area 6 — corresponds to the sum of the depth of said recess and the thickness of component 4; the same applies to thickness "S" of layer 120 relative to panel 118. Component 4 may also be manufactured without layer 8 (figure 3), or may be made up of a small wooden board 25 (or some other sufficiently rigid material) which is both a carrying structure and an ornamental device (fig. 4).

In other two variations, component 4's carrying structure is composed of a metal ring 35 (figure 5) the perimetral development of which contains the perimetral development of said seat 14a; similarly, the yielding elastic layer 8 (figure 6) may be eliminated.

It is understood that the foregoing description, which has been supplied by way of example and is in no way restrictive upon the invention, may be changed, altered or combined, without however exceeding the boundaries protecting this invention as described above and claimed hereunder.

- 1 -

C L A I M S

1) A process for manufactuging coating panels of the type presenting
- in the surface designed to face outwardly - at least two separate
areas, a first area of which (6) is entirely contained in and circumscribed by the second area, said process entailing the employment of
a die-counterdie unit (11 and 12) for the moulding of a corresponding
panel (1), in which the surface (21) of the die (11) defines the surface (1a) of the panel which is designed to face outwardly, and is
endowed with a relief (14) the top perimetral edge of which extends
exactly like the closed line delimiting the aforementioned first area
(6), and entailing, furthermore, the preliminary manufacture of a prac
tically flat component (4) the perimetral development of which contains
the perimetral development of the edge of the head of said relief (14),
and the external front surface of which is designed to identify with
the surface of said first area (6); said process being characterized
by the fact that it comprises the following stages:

a) laying of said component (4) into a complementary seat (14a) produced in the head of said relief (14) so as to match its external front
surface with the surface of said seat (14a) and, furthermore, so
as to allow the edge (4a) of said component to protrude with respect to the perimetral edge (14b) of said head;

b) laying of a sheet (2) so as to make it adhere to the internal front
surface of the above component (4), to the edge of said component
and to that portion of the surface (21) of the die (11) defining
the second area of the surface of the panel (1a) designed to face
outwardly;

c) closing of the die-counterdie unit and subsequent pressure injection of synthetic resin into the hollow space (15) formed by said
sheet (2) and by the surface (22) of the counterdie (12), and subsequent opening, after a definite time, of said unit, hence drawing of the moulded panel from same.

2) A process for manufacturing coating panels of the type presenting,

in the surface designed to face outwardly, at least two separate areas, a first area of which (6) is entirely contained in and circumscribed by the second area, said process entailing the employment of a die (111) the surface (121) of which defines the surface of the panel designed to face outwardly, and is endowed with a relief (14) the upper perimetral edge of which extends exactly in accordance with the closed line delimiting the aforementioned first area, and is furthermore characterized by having holes (115) connected to some suction units, said process also entailing the preliminary execution of a prac tically flat component (4), the perimetral development of which contains the perimetral development of the edge of the head of said relief (14) and the external front surface of which is designed to iden tify with the surface of said first area; the above process being cha racterized by the fact that it comprises the following stages:

a) laying of said component (4) into a complementary seat (14a) pro duced in the head of said relief (1ʌ) so as to match its external front surface with the surface of said seat (14a), and, furthermore, so as to allow the edge (4a) of said component to protrude with respect to the perimetral edge (14b) of the abovementioned head;

b) laying of a thermoformable material slab (116), which is made to rest on the die and on the internal front surface of said compo nent (4);

c) heating of said thermoformable slab (116) at a definite temperature;

d) actuation of the aforementioned suction units in order to achieve the permanent set of the above slab (116), by using such units to keep it adherent to the internal front surface of said component (4), to the edge (4a) of same and to the remaining surface of the die (111) for such an amount of time as is required by the slab to reach permanent hardening.

3) A coating panel obtained through the process mentioned under claim 1, said panel presenting - in the surface designed to face outwardly - at least two separate areas, a first area (6) of which is entirely contained in and circumscribed by the second area, said panel being characterized by the fact that the abovementioned first area (6) is defined by the external front surface of a practically flat component (4), the edge of the latter being enclosed tightly by a portion of a coating sheet (3) arranged integrally on the carrying framework of the panel, in order to define the abovementioned second area of the panel, said edge and enclosing portion of the sheet being stably embedded in a groove produced in said carrying framework of the panel and extending symmetrically relative to a plane parallel to said component.

4) A coating panel obtained through the process mentioned under claim 2, said panel (1) presenting - in the surface which is designed to face outwardly - at least two separate areas, a first area of which (6) is entirely contained in and circumscribed by the second area, said panel (1) being characterized by the fact that said first area (6) is defined by the external front surface of a practically flat component (4) the edge (4a) of which is stably embedded in a groove (15a) produced in a slab (5) which constitutes the carrying framework of the above coating panel, and at the same time defines the aforementioned second area, said groove (15a) extending symmetrically relative to a plane which is parallel to said component (4).

5) A panel according to claims 3 or 4 characterized by the fact that the abovementioned component 4 is made up of the following units (moving from the external front surface towards the internal one): a coating sheet (2), a layer of elastic material yielding to the touch (8) and a lamina (5) constituting the carrying framework of said component.

6) A panel according to claims 3 or 4 characterized by the fact that the aforementioned component (4) is made up of the following units (moving from the external front surface toward the internal one): a coating sheet (2) and a lamina (5) constituting the carrying framework of said component (4).

7) A panel according to claims 3 or 4, characterized by the fact that the abovementioned component 4 identifies with a lamina.

8) A panel according to claims 3 or 4, characterized by the fact that said component (4) is composed of the following units (moving from the external front surface toward the internal one): a coating sheet (2), a layer of elastic material yielding to the touch (8), and a ring (35), the perimetral development of which coincides with the perimetral development of the component, constituting the carrying framework of the component itself.

9) A panel according to claims 3 or 4, characterized by the fact that the abovementioned component (4) is made up of the following units (moving from the external front surface toward the internal one): a coating sheet (2) and a ring (35), the perimetral development of which coincides with the perimetral development of component (4), constituting the carrying framework of the component itself.

FIG.7

FIG.6

FIG.4

FIG.5

FIG.3

FIG.2

FIG.1

1/2

00023194

2/2

FIG.8a

FIG.8b

FIG.8c

FIG.8d

**European Patent Office**

**EUROPEAN SEARCH REPORT**

Application number

EP 80 83 0045

| DOCUMENTS CONSIDERED TO BE RELEVANT | | | CLASSIFICATION OF THE APPLICATION (Int Cl ) |
|---|---|---|---|
| Category | Citation of document with indication, where appropriate, of relevant passages | Relevant to claim | |
| | US - A - 4 110 390 (OLCOTT)<br>  * Claims 1,8; figures *<br><br>-- | 1 | B 29 D 27/04 |
| | FR - A - 2 394 377 (FAURE)<br>  * Page 5, lines 16-27; claims 1,8; figure 9 *<br><br>---- | 1 | |

| | TECHNICAL FIELDS SEARCHED (Int. Cl.3) |
|---|---|
| | B 29 D<br>B 29 F<br>E 04 C<br>A 47 C |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search | Date of completion of the search | Examiner | |
| The Hague | 21-10-1980 | SALA | |

EPO Form 1503.1  06.78